Europäisches Patentamt

European Patent Office

Office européen des brevets

(19)

(11) EP 0 601 906 B1

(12) **FASCICULE DE BREVET EUROPEEN**

(45) Date de publication et mention
de la délivrance du brevet:
**24.06.1998 Bulletin 1998/26**

(51) Int Cl.⁶: **H01B 3/46**, C08L 83/04, C08K 13/02

(21) Numéro de dépôt: **93402853.1**

(22) Date de dépôt: **24.11.1993**

(54) **Matériau à base de silicones, notamment pour l'isolation d'un câble électrique, câble électrique dont l'isolation comporte un tel matériau**

Siloxanzusammensetzung für Kabelisolierung und damit isolierte elektrische Kabel

Silicone material for cable insulation and electrical cable insulated with this material

(84) Etats contractants désignés:
**BE DE ES FR GB IT NL**

(30) Priorité: **27.11.1992 FR 9214314**

(43) Date de publication de la demande:
**15.06.1994 Bulletin 1994/24**

(73) Titulaire: **ALCATEL ALSTHOM COMPAGNIE GENERALE D'ELECTRICITE**
**75008 Paris (FR)**

(72) Inventeurs:
• **Mastrot, Jean-Luc**
**F-01000 St Denis Les Bourg (FR)**

• **Petrignani, Felix**
**F-69650 St Germain au Mont d'Or (FR)**

(74) Mandataire:
**Pothet, Jean Rémy Emile Ludovic et al**
**ALCATEL ALSTHOM,**
**Département de Propriété Industrielle,**
**30, avenue Kléber**
**75116 Paris (FR)**

(56) Documents cités:
EP-A- 0 467 800     DE-C- 3 007 210
FR-A- 2 041 367     FR-A- 2 166 313

**Description**

La présente invention concerne un matériau à base de silicones, notamment pour l'isolation d'un câble électrique destiné à être utilisé sous de hautes températures (typiquement de l'ordre de 180°C en continu). Elle concerne également un câble électrique dont l'isolation comporte un tel matériau.

Les câbles électriques d'énergie habituellement destinés à fonctionner sous de hautes températures ont souvent leur gaine de protection extérieure réalisée à base de polymères polysiloxanes (plus communément appelés silicones). Il est bien connu en effet que la tenue aux hautes températures (jusqu'à environ 200°C en continu) des silicones est leur principale propriété. Ainsi, les silicones sont tout à fait adaptés lorsque l'on cherche à doter le câble d'une isolation ayant de bonnes propriétés mécaniques à haute température et une bonne tenue au vieillissement accéléré (on appelle tenue au vieillissement accéléré la capacité d'un matériau à tenir des températures très élevées, supérieures à 200°C par exemple, pendant des durées relativement courtes, de l'ordre de quelques jours, tout en conservant ses propriétés mécaniques lorsqu'il est ramené dans ses conditions normales d'utilisation ; le vieillissement accéléré est un essai classique effectué sur les câbles afin de vérifier la tenue au vieillissement des matériaux utilisés).

Les matériaux à base de silicones actuellement utilisés pour l'isolation de câbles destinés à fonctionner à des températures de l'ordre de 180°C en continu comprennent principalement des silicones de type VMQ (Vinyl Methyl Quality). Les silicones de type VMQ sont obtenus à partir des polydiméthylsiloxanes en remplaçant certains groupements méthyles par des groupements vinyles.

La substitution de quelques groupements méthyles par des groupements vinyles permet de rendre les silicones obtenus plus réactifs à la vulcanisation par des peroxydes organiques. Si le taux de groupements vinyles est important, une post-vulcanisation du matériau en reprise après son extrusion sur le câble n'est pas nécessaire. Ceci est particulièrement avantageux car la post-vulcanisation (on dit aussi recuisson) est effectuée à température élevée pendant plusieurs heures, ce qui a pour effet de détériorer les conducteurs du câble qui sont en contact direct avec le matériau vulcanisé, notamment en oxydant le cuivre ou les autres métaux les constituant.

On peut donc utiliser actuellement pour réaliser l'isolation des câbles destinés à fonctionner sous de hautes températures des matériaux à base de silicones de type VMQ à fort taux de groupements vinyles.

Cependant, bien que les principales caractéristiques des matériaux utilisés à présent restent satisfaisantes pour la plupart des applications après un vieillissement accéléré de ces matériaux pendant 10 jours à 210°C, il n'en va pas de même des variations de ces caractéristiques pendant le vieillissement.

Ainsi, par exemple, les variations de la résistance à la rupture et de l'allongement à la rupture de ces matériaux dépassent ±25%. De telles variations ne sont pas tolérables dans certaines applications.

Le but de la présente invention est de mettre au point un matériau, notamment pour l'isolation d'un câble électrique, capable de tenir en continu des températures de l'ordre de 180°C et tel que les variations de son allongement à la rupture et de sa résistance à la rupture après un vieillissement de 10 jours à 210°C ne dépassent pas ±25%.

La présente invention propose à cet effet un matériau, notamment pour l'isolation d'un câble électrique, à base d'un premier polymère polysiloxane de type VMQ, ledit polymère étant vulcanisable sans recuisson à l'aide de peroxydes organiques, caractérisé en ce que ledit polymère a une dureté Shore A au moins égale à 40 et en ce que ledit mélange comporte :

- entre 15% et 35% en masse dudit polymère,
- entre 0,35% et 1,4% en masse d'un peroxyde organique sur un support de charge minérale,
- entre 0,3% et 1,2% en masse d'un premier agent thermique pour la tenue à la chaleur dudit matériau entre 300 et 310°C,
- entre 0,35% et 1,4% en masse d'un deuxième agent thermique pour la tenue à la chaleur dudit matériau entre 270 et 280°C.

La composition particulière élaborée garantit une tenue en continu à 180°C du matériau et des variations après vieillissement de l'allongement à la rupture et de la résistance à la rupture inférieures à ±25%.

En outre, le matériau selon l'invention peut contenir entre 22,5% et 67,5% en masse d'une charge renforçante à base de silice. Dans ce cas, on peut utiliser un agent compatibilisant sous forme de charge polymère destinée à améliorer l'incorporation de la charge de silice dans le mélange.

La silice renforçante permet d'améliorer la résistance à la rupture du matériau et sa tenue thermique.

Selon une caractéristique avantageuse, le matériau selon l'invention contient en outre entre 10% et 30% en masse d'un deuxième polymère polysiloxane de type VMQ vulcanisable sans recuisson à l'aide de peroxydes organiques, ce deuxième polymère ayant une dureté Shore A au moins égale à 70 et possédant une résistance à la coupure avant vulcanisation comprise entre 400 et 450 N.

L'addition de ce deuxième polymère permet au matériau d'avoir une bonne résistance à la coupure avant et surtout après vulcanisation.

Le matériau selon l'invention peut en outre contenir entre 10% et 30% en masse d'un troisième polymère polysiloxane de type VMQ vulcanisable sans recuisson à l'aide de peroxydes organiques, ce troisième polymère ayant une dureté Shore A au moins égale à 70 et possédant une résistance au déchirement angulaire comprise entre 50 et 55 kN/m.

Les avantages procurés par ce troisième polymère sont du même type que ceux procurés par le deuxième polymère.

Afin d'améliorer encore la tenue à la chaleur du matériau, on peut y ajouter entre 0,2% et 1% en masse d'un troisième agent thermique pour la tenue à la chaleur du matériau entre 200 et 250°C.

De préférence, les principaux agents thermiques pour la tenue à la chaleur du matériau sont introduits dans ce dernier sur un support silicone, de manière à améliorer leur dispersion dans la gomme de base.

Par ailleurs, le peroxyde utilisé peut être dosé à 45% de la charge minérale constituant son support, cette charge minérale étant par exemple de la craie.

Le ou les polymères polysiloxanes utilisés peuvent se trouver notamment sous la forme soit d'huiles, soit de gommes, soit de mélanges de ces derniers.

Une composition particulière du matériau selon l'invention donnant le meilleur compromis de résultats est la suivante :

- 27,26% en masse dudit premier polymère de type VMQ vulcanisable sans recuisson à l'aide de peroxydes organiques et ayant une dureté Shore A au moins égale à 40,
- 20,45% en masse d'une deuxième gomme de polysiloxanes de type VMQ vulcanisable sans recuisson à l'aide de peroxydes organiques, cette deuxième gomme ayant une dureté Shore A au moins égale à 70 et possédant une résistance à la coupure avant vulcanisation comprise entre 400 et 450 N,
- 20,45% en masse d'une troisième gomme de polysiloxanes de type VMQ vulcanisable sans recuisson à l'aide de peroxydes organiques, cette troisième gomme ayant une dureté Shore A au moins égale à 70 et possédant une résistance au déchirement angulaire comprise entre 50 et 55 kN/m,
- 0,7% en masse de peroxyde organique dosé à 45% de la charge minérale constituant son support,
- 28,29% en masse de silice de diatomées comme charge renforçante à base de silice,
- 0,7% en masse d'un sel de terre rare sur support silicone comme agent thermique pour la tenue à la chaleur du matériau notamment entre 270 et 280°C,
- 0,3% en masse d'oxyde de manganèse en poudre comme agent thermique pour la tenue à la chaleur du matériau notamment entre 200 et 250°C,
- 0,5% en masse de noir de carbone sur support de silicone comme agent thermique pour la tenue à la chaleur du matériau notamment entre 300 et 310°C,
- 0,7% en masse d'un agent compatibilisant de la silice de diatomées,
- le reste d'agents de mise en oeuvre.

La présente invention propose également un câble électrique dont l'isolation comporte un matériau tel que défini ci-dessus.

D'autres caractéristiques et avantages de la présente invention, ainsi qu'un exemple de formulation et des résultats d'expériences effectuées sur le matériau conforme à cet exemple de formulation sont donnés ci-après à titre illustratif et nullement limitatif.

Dans la formulation classique des matériaux d'isolation à base de silicones, on trouve, mis à part les polymères polysiloxanes eux-mêmes (sous forme d'huiles, de gommes ou de mélanges de ces derniers) et les agents de réticulation tels que les peroxydes organiques (peroxyde de benzoyle, peroxyde de 2-4 dichlorobenzoyle, peroxyde de dicumyle ou 2-5 diméthyl 2-5 ditertiobutyl hexane), des charges renforçantes, en général des silices, et des additifs, notamment des agents de tenue thermique.

Il faut savoir par ailleurs que les principaux polymères polysiloxanes sont fournis par les fabricants uniquement sous forme de mélanges-maîtres constitués de plusieurs silicones, et que leur composition exacte n'est pas révélée.

Comme cela a été mentionné dans le préambule, les polymères polysiloxanes qui conviennent sont les polymères constitués de silicones de type VMQ à taux moyen de groupements vinyles (de l'ordre de 1,5%), vulcanisables sans recuisson à l'aide de peroxydes organiques.

Dans un exemple préféré mais non limitatif de formulation conforme à la présente invention, on utilise un mélange de plusieurs gommes polysiloxanes du type précédent.

La première de ces gommes est commercialisée sous la marque "NPC40" par la société STI et a une dureté Shore A de 40. On appelle dureté shore A une mesure de dureté utilisée pour les pièces en caoutchouc relativement souples. Elle correspond à la détermination du module élastique d'un vulcanisat sous faible contrainte par pénétration d'une pointe de dimensions données sous l'effet d'une charge constante. Les essais sont réalisés sur une épaisseur minimale de 6 mm et sur une surface d'au moins 30 mm de diamètre. La mesure peut être instantanée ou réalisée après un certain temps, par exemple 30 secondes, d'application de la pointe. La norme utilisée est la norme ASTM D2240.

La première gomme constitue 27,26% en masse du mélange. Cette première gomme a pour effet de favoriser la tenue au vieillissement du matériau. De plus, elle contient un fort taux de groupements vinyles (environ 1,2% en masse), et de ce fait, elle est très réactive aux peroxydes organiques, notamment au 2-5 diméthyl 2-5 ditertiobutyl peroxy hexane. Ainsi, la vulcanisation est très rapide et aucune recuisson préjudiciable à l'âme conductrice du câble n'est nécessaire. La proportion de ce peroxyde dans le mélange est de 0,7% en masse, ce peroxyde étant porté par un support minéral (par exemple de la craie) pour favoriser sa dispersion dans le mélange, et dosé à 45% en masse de ce support minéral.

La deuxième gomme utilisée est commercialisée sous la marque "HGS700" par la société STI et a une dureté shore A de 70. Elle constitue 20,45% en masse du mélange. Cette deuxième gomme permet de favoriser la résistance à la coupure du matériau. On appelle résistance à la coupure la force à appliquer au matériau, utilisé comme isolant sur un câble, à l'aide d'un couteau pour que ce dernier pénètre dans l'isolation et parvienne jusqu'au conducteur situé immédiatement en-dessous. Selon la norme NFC 93-522, la vitesse du couteau effectuant ce test doit être de 5 mm. min$^{-1}$.

La troisième gomme utilisée est commercialisée sous la marque "TR70" par la société STI et a une durée shore A de 70. Elle constitue 20,45% en masse du mélange. Cette troisième gomme permet de favoriser la résistance au déchirement angulaire du matériau. On appelle résistance au déchirement angulaire une caractéristique mécanique mesurée par un dynamomètre en traction avec des éprouvettes de type "angulaire" définies dans la norme ASTM D264 (éprouvettes C) à une vitesse de traction de 50 mm/min. Les résultats s'expriment en kN/m car ils représentent le quotient de la force maximale enregistrée par l'épaisseur initiale de l'éprouvette.

Afin d'améliorer les caractéristiques mécaniques générales du matériau (résistance à la rupture, allongement à la rupture, résistance à la coupure), on ajoute dans le mélange 28,29% en masse d'une silice renforçante. La silice renforçante donnant les meilleurs résultats est une silice naturelle dite de diatomées (obtenue à partir de carapaces d'animaux marins broyées), commercialisée par exemple sous la marque "Célite 350" par la société Célite France. Pour améliorer l'incorporation de cette charge renforçante dans le mélange, on peut ajouter un agent compatibilisant (Tensile Modifier) dans la proportion par exemple de 0,7% en masse du mélange. Cet agent peut se trouver par exemple sous la forme d'un mélange maître sur support polymère.

Enfin, pour améliorer encore la tenue au vieillissement du mélange, il est nécessaire d'ajouter certains agents de tenue thermique. Afin de favoriser leur dispersion dans le mélange, ces agents peuvent être portés par un support de silicone. On trouve parmi les agents utilisés dans l'exemple de formulation particulier étudié :

- un sel de terre rare (à base de Césium ou d'éléments de la même famille) sur support de silicone, dont la proportion dans le mélange est de 0,7% en masse ; ce sel de terre rare permet d'améliorer la tenue du matériau aux températures comprises environ entre 270 et 280°C ;

- de l'oxyde de manganèse en poudre, dont la proportion dans le mélange est de 0,3% en masse ; l'oxyde de manganèse permet d'améliorer la tenue du matériau aux températures comprises environ entre 200 et 250°C, en neutralisant le peroxyde restant après vulcanisation ;

- du noir de carbone sur support de silicone, dont la proportion dans le mélange est de 0,5% en masse ; le noir de carbone permet d'améliorer la tenue du matériau aux températures comprises environ entre 300 et 310°C.

Le reste du mélange est constitué d'agents de mise en oeuvre.

Le matériau dont la formulation est donnée dans l'exemple précédent a subi de nombreux essais. Tous ces essais ont été effectués sur un câble comprenant une âme conductrice en cuivre de section égale à 240 mm$^2$ entourée d'un ruban de polyester puis d'une gaine d'isolation de 3,1 mm d'épaisseur constituée du matériau dont la formulation a été donnée dans l'exemple précédent. Le ruban de polyester est utilisé pour éviter une pénétration trop importante du matériau d'isolation dans l'âme du câble.

Pour réaliser la gaine d'isolation à l'aide du matériau selon l'invention, ce dernier est extrudé autour du câble, puis on effectue la vulcanisation en continu à la sortie de l'extrudeuse sous une pression de 17 bars à l'intérieur d'un tube de vulcanisation de 65 m de longueur (dont 25 m destinés au refroidissement à l'eau). La vitesse de défilement du câble à l'intérieur du tube de vulcanisation est de 6 m/min. Les peroxydes peuvent être incorporés préalablement au mélange maintenu à température modérée.

En pratique, le câble reste donc environ 10 minutes à une température de l'ordre de 200°C. Les gommes de silicones utilisées étant à base de silicones de type VMQ, elles sont très réactives aux peroxydes organiques employés, et la vulcanisation totale est donc très rapide. Ainsi, le cuivre, ou tout autre métal, constituant l'âme conductrice du câble, n'a pas le temps de s'oxyder pendant la vulcanisation.

Avant d'effectuer un vieillissement du câble pendant 10 jours dans une étuve à 210°C (norme NFC 32-025), on a mesuré pour la gaine isolante du câble :

- la dureté Shore A,
- la résistance à la rupture $R_R$ (en MPa),
- l'allongement à la rupture $A_R$ (en %),
- le coefficient d'isolement $K_i$ (en $M\Omega.km^{-1}$) à 20°C et à 60°C (le coefficient d'isolement $K_i$ est donné par le formule

$$K_i = \frac{R_i}{\log_{10} \frac{D}{d}},$$

où $R_i$ est la résistance d'isolement, D le diamètre extérieur moyen du câble, et d le diamètre moyen de l'âme conductrice),
- la résistance à la coupure $R_C$ (en N) selon la norme NFC 63-522 précédemment citée, avec une charge appliquée de 400 N au moins,
- l'indice limite d'oxygène ILO (en %) correspondant au pourcentage d'oxygène qu'il faut dans l'atmosphère pour faire brûler le matériau.

Les essais effectués après vieillissement puis maintien du câble pendant au moins 16 heures à température ambiante sont les suivants :

- résistance à la rupture,
- allongement à la rupture.

Les valeurs significatives de ces essais sont la variation entre la résistance à la rupture avant et après vieillissement, notée ΔR/R (en %), et la variation entre l'allongement à la rupture avant et après vieillissement (en %), notée ΔA/R.

On a effectué par ailleurs des essais de résistance à l'huile minérale du matériau, selon la norme NFC 32-028. Ces essais consistent à mesurer les variations de résistance à la rupture et d'allongement à la rupture avant et après avoir mis le câble dans l'huile minérale N°2 à 100°C pendant 24 heures (plus ou moins une heure).

Les résultats sont présentés dans plusieurs tableaux.

Le tableau I présente les résultats des essais effectués avant vieillissement pour le matériau de l'invention ($M_1$) sur un câble tel que celui décrit précédemment, et comporte en outre une colonne où ont été reportés les seuils définis par les normes correspondant à ces essais.

Le tableau II présente les résultats de certains essais effectués après vieillissement pour le matériau $M_1$ et pour le matériau commercialisé sous la marque "RP 31749 CR-L" ($M_2$) par la société Rhône-Poulenc (ce matériau est constitué d'un mélange à base de silicones de type VMQ et vulcanisable sans recuisson ; parmi les matériaux de ce type, hormis celui de l'invention, c'est celui qui fournit les meilleurs résultats), ces essais ayant été effectués sur plaques moulées.

TABLEAU I

| | | Câble $M_1$ | Normes |
|---|---|---|---|
| Dureté Shore A | | 77 | / |
| $R_R$ (MPa) | | 9 | NFC 32-024 : 7 |
| $A_R$ (%) | | 150 | NFC 32-024 : 100 |
| $K_i$ à 20°C ($M\Omega.km^{-1}$) | | 2900 | NFC 32-090 : $\geq$ 200 |
| $K_i$ à 60°C ($M\Omega.km^{-1}$) | | 850 | NFC 32-090 : $\geq$ 3 |
| Vieillissement 10 jours à 210°C | ΔR/R(%) | -21 | NFC 32-025 : ± 25 |
| | ΔA/R(%) | -23 | NFC 32-025 : ± 25 |
| $R_C$(N) | | 550 | NFC 93-522 : $\geq$ 400 |
| ILO(%) | | 30 | NFT 51-071 : $\geq$ 30 |
| 24 heures à 100°C dans l'huile ASTM2 | ΔR/R(%) | -9 | NFC 32-028 : ± 25 |
| | ΔA/R(%) | -8 | NFC 32-028 : ± 30 |

TABLEAU II

| | | M$_1$ | M$_2$ |
|---|---|---|---|
| Dureté Shore A | | 77 | 63 |
| R$_R$(MPa) | | 8,4 | 7,2 |
| A$_R$(%) | | 140 | 195 |
| ILO(%) | | 30 | 29 |
| Vieillissement 10 jours à 210°C | ΔR/R(%) | -18 | -18 |
| | ΔA/R(%) | -22 | -31 |

On indique en premier lieu que le matériau M$_1$ est capable de supporter en continu des températures de l'ordre de 180°C du fait de sa tenue après le vieillissement accéléré effectué. Il est très flexible, ce qui est particulièrement avantageux pour son utilisation en câblerie. Enfin, l'aspect extérieur du matériau M$_1$ extrudé sur le câble est lisse et sans rugosités.

On voit dans les tableaux I et II que le matériau M$_1$ selon l'invention présente des caractéristiques mécaniques de résistance à la rupture et d'allongement à la rupture qui ne varient pas plus de ±25% avant et après vieillissement. Ceci n'est pas le cas pour le matériau M$_2$.

Par ailleurs, on remarque que le matériau selon l'invention satisfait toutes les normes posées.

Des essais complémentaires de moindre importance ont été effectués sur le matériau M$_1$ uniquement. On donne leurs résultats ci-après.

Conformément à la norme NFC 32-028, le matériau ne présente ni fissures, ni craquelures après un séjour de 96 heures dans une atmosphère où la concentration en ozone est comprise entre 0,025 et 0,030% en masse (essai de résistance à l'ozone).

Conformément à la norme NFC 32-029, le matériau peut subir, à la température de 190°C ± 5°C l'action prolongée d'une charge sans que son épaisseur à l'endroit de l'empreinte soit inférieure à 50% de la moyenne des épaisseurs relevées en deux autres endroits non comprimés au voisinage de cette empreinte (essai de compression à chaud).

Conformément à la norme NFC 32-027, le matériau peut subir, à la température de -25°C, un allongement de 20% sans qu'il se produise de craquelures visibles à l'oeil nu (essai de tenue au froid).

Conformément à la norme NFC 32-070, toute flamme amorcée s'éteint d'elle-même dans les 30 secondes qui suivent le retrait de la source en ignition. En outre, à 35 cm de son extrémité inférieure, l'éprouvette essuyée et débarrassée des dépôts issus des fumées ne présente pas de craquelures (essai de résistance au feu).

Les résultats de l'essai de non propagation de la flamme correspondent à la classe C de la norme NFF 16-101.

Le matériau est exempt de composés halogénés et soufrés (normes NFF 16-101 et NFX 70-100).

L'indice de fumée correspond à un classement F1 (normes NFF 16-101 et NFX 10-702).

Bien entendu, les valeurs données dans l'exemple de formulation ne sont que des indications, et l'invention concerne tout mélange comportant :

- entre 15% et 35% en masse d'un polymère polysiloxane de type VMQ, vulcanisable sans recuisson à l'aide de peroxydes organiques, ayant une dureté Shore A au moins égale à 40,
- entre 0,35% et 1,4% en masse d'un peroxyde organique sur un support de charge minérale,
- entre 0,3% et 1,2% en masse d'un agent thermique pour la tenue à la chaleur du matériau notamment entre 300 et 310°C,
- entre 0,35% et 1,4% en masse d'un agent thermique pour la tenue à la chaleur du matériau notamment entre 270 et 280°C.

Les polymères polysiloxanes utilisés peuvent être des huiles, des gommes ou des mélanges de ces derniers.

Les valeurs en pourcentages données peuvent être respectées à plus ou moins 0,1% pour les agents thermiques et compatibilisants et le péroxyde, et à plus ou moins 0,5% pour les polymères polysiloxanes et la charge renforçante, sans sortir du cadre de l'invention et pour être sûr d'obtenir les caractéristiques mécaniques, physico-chimiques et de comportement au feu annoncées.

**Revendications**

1. Matériau, notamment pour l'isolation d'un câble électrique, à base d'un premier polymère polysiloxane de type VMQ, ledit polymère étant vulcanisable sans recuisson à l'aide de peroxydes organiques, caractérisé en ce que ledit polymère a une dureté Shore A au moins égale à 40 et en ce que ledit mélange comporte :

   - entre 15% et 35% en masse dudit polymère,
   - entre 0,35% et 1,4% en masse d'un peroxyde organique sur un support de charge minérale,
   - entre 0,3% et 1,2% en masse d'un premier agent thermique pour la tenue à la chaleur dudit matériau entre 300 et 310°C,
   - entre 0,35% et 1,4% en masse d'un deuxième agent thermique pour la tenue à la chaleur dudit matériau entre 270 et 280°C.

2. Matériau selon la revendication 1 caractérisé en ce qu'il contient entre 22,5% et 67,5% en masse d'une charge renforçante à base de silice.

3. Matériau selon l'une des revendications 1 ou 2 caractérisé en ce qu'il contient en outre entre 10% et 30% en masse d'un deuxième polymère polysiloxane de type VMQ vulcanisable sans recuisson à l'aide de peroxydes organiques, ledit deuxième polymère ayant une dureté Shore A au moins égale à 70 et possédant une résistance à la coupure avant vulcanisation comprise entre 400 et 450 N.

4. Matériau selon l'une des revendications 1 à 3 caractérisé en ce qu'il contient en outre entre 10% et 30% en masse d'un troisième polymère polysiloxane de type VMQ vulcanisable sans recuisson à l'aide de peroxydes organiques, ledit troisième polymère ayant une dureté Shore A au moins égale à 70 et possédant une résistance au déchirement angulaire comprise entre 50 et 55 kN/m.

5. Matériau selon l'une des revendications 1 à 4 caractérisé en ce qu'il comporte en outre entre 0,2% et 1% en masse d'un troisième agent thermique pour la tenue à la chaleur dudit matériau notamment entre 200 et 250°C.

6. Matériau selon l'une des revendications 1 à 5 caractérisé en ce que lesdits agents thermiques améliorant la tenue à la chaleur dudit matériau sont portés par un support silicone.

7. Matériau selon l'une des revendications 1 à 6 caractérisé en ce que ledit peroxyde est dosé à 45% de ladite charge minérale constituant son support.

8. Matériau selon l'une des revendications 1 à 7 caractérisé en ce que le ou lesdits polymères polysiloxanes entrant dans sa composition se trouvent sous forme d'huiles, de gommes ou de mélanges de ces derniers.

9. Matériau selon la revendication 1 caractérisé en ce qu'il contient :

   - 27,26% en masse dudit premier polymère,
   - 20,45% en masse d'une deuxième gomme de polysiloxanes de type VMQ vulcanisable sans recuisson à l'aide de peroxydes organiques, ladite deuxième gomme ayant une dureté Shore A au moins égale à 70 et possédant une résistance à la coupure avant vulcanisation comprise entre 400 et 450 N,
   - 20,45% en masse d'une troisième gomme de polysiloxanes de type VMQ vulcanisable sans recuisson à l'aide de peroxydes organiques, ladite troisième gomme ayant une dureté Shore A au moins égale à 70 et possédant une résistance au déchirement angulaire comprise entre 50 et 55 kN/m,
   - 0,7% en masse dudit peroxyde dosé à 45% de ladite charge minérale constituant son support,
   - 28,29% en masse de silice de diatomées,
   - 0,7% en masse d'un sel de terre rare sur support silicone,
   - 0,3% en masse d'oxyde de manganèse en poudre,
   - 0,5% en masse de noir de carbone sur support de silicone,
   - 0,7% en masse d'un agent compatibilisant de la silice de diatomées,
   - le reste d'agents de mise en oeuvre.

**Patentansprüche**

1. Material, insbesondere für die Isolation eines elektrischen Kabels auf der Basis eine ersten Polysiloxanpolymers vom Typ VMQ, wobei das Polymer ohne Wiedererwärmen mit Hilfe von organischen Peroxiden härtbar ist, dadurch gekennzeichnet, daß das Polymer eine Shorehärte A von mindestens 40 hat und daß die Mischung umfaßt:

   - zwischen 15 und 35 Massen-% des Polymers,
   - zwischen 0,35 und 1,4 Massen-% eines organischen Peroxids auf einem Träger aus mineralischem Füllstoff,
   - zwischen 0,3 und 1,2 Massen-% eines ersten thermischen Mittels für die Wärmebeständigkeit des Materials zwischen 300 und 310°C,
   - zwischen 0,35 und 1,4 Massen-% eines zweiten thermischen Mittels für die Wärmebeständigkeit des Materials zwischen 270 und 280°C.

2. Material nach Anspruch 1, dadurch gekennzeichnet, daß es zwischen 22,5 und 67,5 Massen-% eines Verstärkungsfullstoffs auf Siliciumbasis enthält.

3. Material nach einem der Ansprüche 1 oder 2, dadurch gekennzeichnet, daß es außerdem zwischen 10 und 30 Massen-% eines zweiten Polysiloxanpolymers vom Typ VMQ enthält, das ohne Wiedererwärmen mit Hilfe von organischen Peroxiden härtbar ist, wobei das zweite Polymer eine Shorehärte A von mindestens 70 hat und einen Einschnittwiderstand vor der Aushärtung zwischen 400 und 450 N hat.

4. Material nach einem der Ansprüche 1 bis 3, dadurch gekennzeichnet, daß es außerdem zwischen 10 und 30 Massen-% eines dritten Polysiloxanpolymers vom Typ VMQ enthält, das ohne Wiedererwärmen mit Hilfe von organischen Peroxiden härtbar ist, wobei das dritte Polymer eine Shorehärte A von wenigstens 70 hat und eine Winkel-Reißfestigkeit zwischen 50 und 55 kN/m besitzt.

5. Material nach einem der Ansprüche 1 bis 4, dadurch gekennzeichnet, daß es außerdem zwischen 0,2 und 1 Massen-% eines dritten thermischen Mittels für die Wärmebeständigkeit des Materials insbesondere zwischen 200 und 250°C umfaßt.

6. Material nach einem der Ansprüche 1 bis 5, dadurch gekennzeichnet, daß die thermischen Mittel, die die Wärmebeständigkeit des Materials verbessern, von einem Siliconträger getragen werden.

7. Material nach einem der Ansprüche 1 bis 6, dadurch gekennzeichnet, daß das Peroxid zu 45% des seinen Träger bildenden mineralischen Füllstoffs dosiert ist.

8. Material nach einem der Ansprüche 1 bis 7, dadurch gekennzeichnet, daß das oder die Polysiloxanpolymere, die in seiner Zusammensetzung enthalten sind, in Form von Ölen, Gummis oder Mischungen dieser letzteren vorliegen.

9. Material nach Anspruch 1, dadurch gekennzeichnet, daß es enthält:

   - 27,26 Massen-% des ersten Polymers,
   - 20,45 Massen-% eines zweiten Polysiloxangummis vom Typ VMQ, der ohne Wiedererwärmen mit Hilfe von organischen Peroxiden härtbar ist, wobei dieser zweite Gummi eine Shorehärte A von mindestens 70 hat und einen Einschnittwiderstand vor der Aushärtung zwischen 400 und 450 N besitzt,
   - 20,45 Massen-% eines dritten Polysiloxangummis vom Typ VMQ, der ohne Wiedererwärmen mit Hilfe von organischen Peroxiden härtbar ist, wobei dieser dritte Gummi eine Shorehärte A von mindestens 70 hat und eine Winkel-Reißfestigkeit zwischen 50 und 55 kN/m besitzt,
   - 0,7 Massen-% des Peroxids, das zu 45% des seinen Träger bildenden mineralischen Füllstoffs dosiert ist,
   - 28,29 Massen-% Silicium von Diatomeen,
   - 0,7 Massen-% eines Salzes einer Seltenen Erde auf Siliconträger,
   - 0,3 Massen-% pulverförmiges Manganoxid,
   - 0,5 Massen-% Carbon Black auf Siliconträger,
   - 0,7 Massen-% eines kompatibilisierenden Mittels für das Silicium von Diatomeen,
   - der Rest Mittel zur Durchführung.

**Claims**

1.  A material, in particular for the insulation on an electrical cable, the material being based on a first VMQ-type polysiloxane polymer, it being possible for said polymer to be vulcanized without annealing and by means of organic peroxides, said material being characterized in that said polymer has Shore A hardness of not less than 40, and in that the mixture constituting said material includes:

    in the range 15% by weight to 35% by weight of said polymer;
    in the range 0.35% by weight to 1.4% by weight of an organic peroxide on an inorganic filler substrate;
    in the range 0.3% by weight to 1.2% by weight of a first temperature-resisting agent to make said material resistant to temperatures in the range 300°C to 310°C; and
    in the range 0.35% by weight to 1.4% by weight of a second temperature-resisting agent to make said material resistant to temperatures in the range 270°C to 280°C.

2.  A material according to claim 1, characterized in that it contains in the range 22.5% by weight to 67.5% by weight of a reinforcing filler based on silica.

3.  A material according to claim 1 or 2, characterized in that it further contains in the range 10% by weight to 30% by weight of a second VMQ-type polysiloxane polymer that can be vulcanized without annealing and by means of organic peroxides, said second polymer having Shore A hardness of not less than 70, and having cutting strength prior to vulcanization lying in the range 400 N to 450 N.

4.  A material according to any one of claims 1 to 3, characterized in that it further contains in the range 10% by weight to 30% by weight of a third VMQ-type polysiloxane polymer that can be vulcanized without annealing and by means of organic peroxides, said third polymer having Shore A hardness of not less than 70, and having angular tear strength lying in the range 50 kN/m to 55 kN/m.

5.  A material according to any one of claims 1 to 4, characterized in that it further includes in the range 0.2% by weight to 1% by weight of a third temperature-resisting agent for making said material resistant to temperatures in particular in the range 200°C to 250°C.

6.  A material according to any one of claims 1 to 5, characterized in that said temperature-resisting agents improving the resistance to temperature of said material are carried by a silicone substrate.

7.  A material according to any one of claims 1 to 6, characterized in that said peroxide is set at 45% of said inorganic filler constituting its substrate.

8.  A material according to any one of claims 1 to 7, characterized in that the polysiloxane polymers involved in its composition are in the form of oils, rubbers, or of mixtures thereof.

9.  A material according to claim 1, characterized in that it contains:

    27.26% by weight of said first polymer;
    20.45% by weight of a second VMQ-type polysiloxane rubber that can be vulcanized without annealing and by means of organic peroxides, said second rubber having Shore A hardness of not less than 70, and having cutting strength prior to vulcanization lying in the range 400 N to 450 N;
    20.45% by weight of a third VMQ-type polysiloxane rubber that can be vulcanized without annealing and by means of organic peroxides, said third rubber having Shore A hardness of not less than 70, and having angular tear strength lying in the range 50 kN/m to 55 kN/m;
    0.7% by weight of said peroxide set at 45% of said inorganic filler constituting its substrate;
    28.29% by weight of diatom silica;
    0.7% by weight of a rare earth salt on a silicone substrate;
    0.3% by weight of manganese oxide in powder form;
    0.5% by weight of carbon black on a silicone substrate;
    0.7% by weight of a tensile modifier for making the diatom silica compatible; and
    the residue made up of processing agents.